# EUROPEAN PATENT APPLICATION

(11) **EP 4 289 254 A1**
(43) Date of publication of application: **13.12.2023**
(21) Application number: 22178494.5
(22) Date of filing: 10.06.2022
(51) Int. Cl.: A01F 7/06, A01F 12/44

(54) **A FEED ROLL FOR A COMBINE HARVESTER**

(71) Applicant: CNH Industrial Belgium N.V., 8210 Zedelgem (BE)
(72) Inventor: Jongmans, Dré W.J., 4791 AG Klundert (NL); Van Overschelde, Pieter, 8200 Sint-Andries (BE); Eeckeloo, Stefaan, 8490 Zerkegem (BE); Verschaeve, Bertl, 8830 Gits (BE); Reubens, Sam, 8200 Sint-Michiels (BE); Missotten, Bart M.A., 3020 Herent (BE)
(74) Representative: CNH Industrial IP Department

(57) **Abstract**

A feed roll (10) according to the invention comprises multiple paddles (12) mounted upright on the cylindrical surface (14) of the roll and oriented parallel to the roll's rotation axis (19), and multiple V-shaped guide vanes (17) in a central area (26) of the feed roll (10). Characteristically for the invention, one or more paddles (12) or paddle portions are located in the central area (26). According to particular embodiments, said paddles (12) or paddle portions are located between the blades (20) that define the V-shaped vanes (17), i.e. blades which extend between a top point (23) at or near the tip of the V-shape and a base point (24) at the base of the V-shape. Paddles (12) may be present between said base points (24) of one or more of the V-shaped vanes (17), and additional intermediate paddles (27) may be located between the top points (23) and the base points (24) of the blades. The paddles (12) or paddle portions located in the central area (26) enhance the capability of deflecting stones or other objects away from the threshing rotors (7) mounted downstream of the feed roll (10) in a combine harvester (15) according to the invention.

## Description

### Field of the invention

The invention is related to agricultural machines, in particular to a feed roll applicable in a combine harvester.

### Background of the invention

Agricultural combine harvesters are machines designed for harvesting and processing crops such as wheat or corn. Crops are cut from the field on a wide area by a header mounted at the front of the combine. The harvested material is transported by a feeder to a pair of transversally or longitudinally mounted threshing rotors.

Immediately upstream of the threshing rotors, a feed roll is mounted. This feed roll is rotatable about a rotation axis that is transversal to the longitudinal direction of the harvester. The function of the feed roll is to guide crops through to the threshing rotors while removing objects such as stones or wooden blocks. To this aim, the feed roll comprises upstanding paddles on the cylindrical surface of the roll which serve to propel crops towards the threshing rotors while deflecting stones and other objects away from the rotors.

In the particular case of longitudinally mounted threshing rotors, it is known to apply a feed roll provided with V-shaped guide vanes attached to the surface of the roll in a central area thereof. An example of such a feed roll is disclosed in patent publication document EP0230276. The guide vanes enable an more gradual trajectory of the crops toward the threshing rotors, resulting in a better energy efficiency of the harvester.

Nevertheless, the presence of the V-shaped vanes in the central area of the feed roll is likely to diminish the function of object removal in that area.

### Summary of the invention

The present invention aims to solve the problems highlighted above. This aim is achieved by a feed roll for a combine harvester and a harvester in accordance with the appended claims.

A feed roll according to the invention comprises multiple paddles mounted upright on the cylindrical surface of the roll and oriented parallel to the roll's rotation axis, and multiple V-shaped guide vanes in a central area of the roll. The exact realization of the paddles and the vanes may be in accordance with any design. Characteristically for the invention, one or more paddles or paddle portions are located in the central area. According to particular embodiments, said paddles or paddle portions are located between the blades that define the V-shaped vanes, i.e. blades which extend between a top point at or near the tip of the V-shape and a base point at the base of the V-shape. Paddles may be present between said base points, and additional intermediate paddles may be located between the top points and the base points of the blades.

The paddles or paddle portions located in the central area enhance the capability of deflecting stones or other objects away from the threshing rotors mounted downstream of the feed roll.

### Brief description of the drawings

Figure 1 is a schematic side view of a combine harvester, indicating the position of the feed roll between the feeder and the threshing rotors.
Figure 2a shows a feed roll according to one embodiment of the invention. Figure 2b shows a detail of the central area of the feed roll of Figure 2a.
Figures 3a and 3b illustrate different possible configurations according to embodiments of the invention.
Figure 4 shows a feed roll according to an embodiment of the invention wherein the V-shaped guide vanes are mutually overlapping.

### Detailed description of preferred embodiments of the invention

Preferred embodiments will now be described with reference to the drawings. The detailed description is not limiting the scope of the invention, which is defined only by the appended claims.

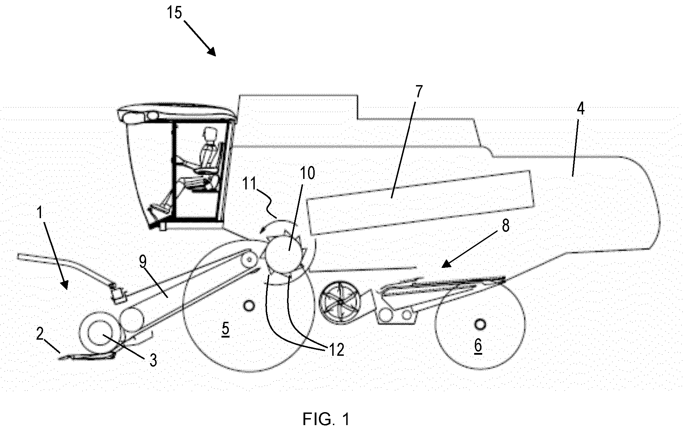

Figure 1 shows a side view of a combine harvester 15, comprising a header 1 mounted at the front of the combine. The header comprises knives 2 maintained at a given height above ground level while the combine moves through a field of crops that are to be harvested. Cut crops are transported from both sides of the header towards a central area by an auger 3 or alternatively by a pair of draper belts. The main body 4 of the combine is supported by front and rear wheels 5 and 6 and comprises a pair of longitudinally mounted threshing rotors 7 and a cleaning section 8 generally known by the skilled reader and not described here in detail. From the central area of the header 1, crops are transported by a feeder 9. A feed roll 10 is mounted between the feeder 9 and the threshing rotors 7. The direction of rotation of the feed roll 10 when the combine is in normal operation is indicated by an arrow 11. Paddles 12 are mounted on the cylindrical surface of the feed roll 10. The paddles 12 are generally defined within the context of the invention as structures which are mounted upright on the cylindrical surface of the feed roll 10 and which have a crop-engaging surface configured to propel crops coming from the feeder 9 towards the threshing rotors 7 along a path passing underneath the feed roll 10. While the crops pass underneath the rotating feed roll 10, objects are bouncing off the face of the paddles 12, and are thereby deflected away from the crops which pass through to the threshing rotors 7. The term 'upright' applied above is not limited to the crop engaging surface of the paddles 12 being oriented orthogonally with respect to surface of the feed roll 10. The paddles 12 may be inclined forward or backward relative to said orthogonal orientation within a given angular range defined by the requirement that the paddles are capable of performing the function of propelling crops and deflecting stones.

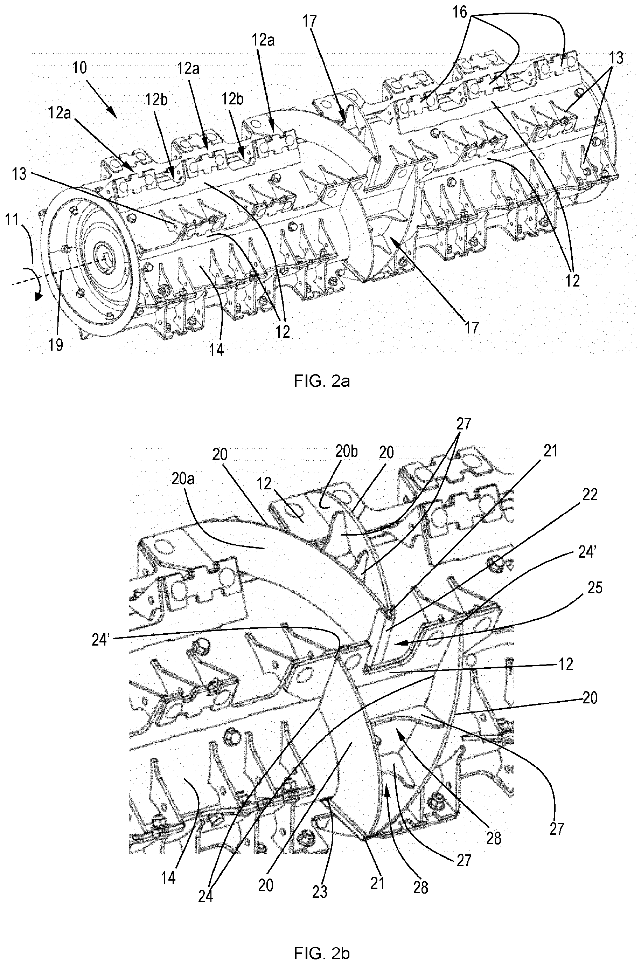

The invention is not limited to any particular shape or material of the paddles 12, as long as the above-described function of the paddles is fulfilled. One exemplary configuration is illustrated in Figures 2a and 2b which illustrate a feed roll 10 in accordance with an embodiment of the invention. The direction of rotation of the roll about its central rotation axis 19 is again indicated by an arrow 11. The paddles 12 are realized as planar strips bolted to a plurality of support brackets 13 which are welded to the surface 14 of the feed roll 10. The strips 12 comprise crenelated crop-engaging portions 12a separated by U-shaped gaps 12b. The crenelated portions 12a are reinforced by crop-engaging plate elements 16.

Figure 2a equally shows one embodiment of V-shaped guide vanes 17 mounted in a central area of the feed roll 10 and configured to guide crops along two outwardly tapering paths, towards the respective threshing rotors mounted downstream of the feed roll. With reference to the detailed view in Figure 2b, it is seen that each V-shaped guide vane 17 comprises two blades 20 mounted upright on the cylindrical surface 14 of the feed roll 10, and each having a crop-engaging outer surface 20a and an inner surface 20b. In the embodiment shown, the blades 20 of each V-shaped vane 17 are joined at the tip of the V-shape by an upstanding rib 21 reinforced by a plate element 22. The blades 20 are tapering outward in opposite directions from said rib 21, each blade 20 extending between a top point 23 and a respective base point 24 on the cylindrical surface 14 of the feed roll 10. In the embodiment shown, the top points 23 of the blades 20 are coinciding at the location of the rib 21. In alternative embodiments falling within the scope of the invention, the top points 23 of the blades 20 could be slightly separated from each other while still lying near to the tip of the V-shape defined by the orientation of the blades 20.

Again, the term 'upright' applied with respect to the blades 20 is not limited to the crop engaging surface 20a of the blades 20 being oriented orthogonally with respect to the surface 14 of the feed roll. The blades 20 may be slightly inclined forward or backward relative to said orthogonal orientation. In the embodiment shown, the crop engaging surfaces 20a of the blades 20 are shaped as helicoidal surfaces winding along a spiral path around the cylindrical surface 14 of the feed roll 10, with the blades 20 of consecutive V-shaped vanes 17 being mutually parallel. The invention is however not limited to such a helicoidal configuration. In fact, any configuration of V-shaped guide vanes suitable for performing the crop guiding function is applicable on a feed roll according to the invention.

In the embodiment shown in Figures 2a and 2b, the V-shaped vanes 17 are mounted one behind the other along the circumference of the feed roll 10, in nonoverlapping fashion, i.e. the top rib 21 of each vane 17 is placed behind the base points 24 of the preceding vane 17. It is seen that some of the paddles 12 extend into the central area of the feed roll where the V-shaped vanes 17 are located. In particular, a portion of one long paddle 12 extends essentially between the base points 24 of each of the V-shaped vanes, with a gap 25 positioned centrally between the base points 24. The gap 25 is upwardly open, i.e. it is open at the top and closed at the bottom. In the embodiment shown, the gap 25 has a rounded U shape. Other shapes are however possible, such as a rectangular U-shape or a V shape.

Instead of a paddle or a portion of a paddle provided with a U-shaped central gap 25, one closed paddle or one closed paddle portion (i.e. without a gap) could be provided in the central area, for example between the base points 24, which maximizes the stone deflection capability in the central area. Another alternative includes two separate paddles or paddle portions with a central opening between the two, which is advantageous in terms of the crop flow, as the opening facilitates the passage of the crops towards the next V-shaped vane 17. The central gap 25 however represents a preferred embodiment, as it combines the functions of facilitating the crop flow and maintaining a capability of deflecting stones, as a given height of the paddle remains at the bottom of the gap 25. Said height at the bottom of the gap 25 also maintains a degree of mechanical stability of the paddle 12. According to embodiments of the invention, the height of the paddle 12 at the bottom of the gap 25 is up to one half of the paddle height outside the gap. According to further embodiments, said height at the bottom of the gap is up to 1/3 of the height of the paddle outside the gap.

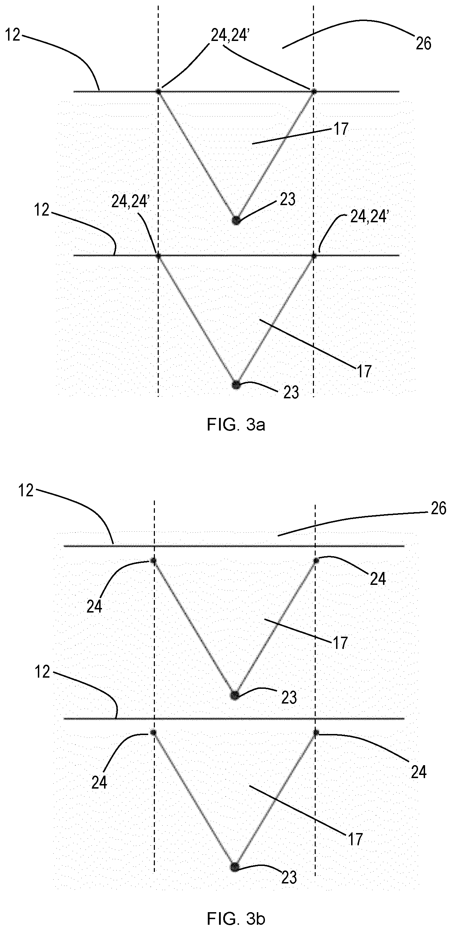

It is seen that the base of the paddle 12 is somewhat distanced from the base points 24 of the blades 20, but that the top points 24' are in contact with the paddle 12. This is one possible embodiment of a paddle portion located in the central area. Other possible embodiments are illustrated in simplified and 'rolled-out' top views in Figures 3a and 3b. The central area 26 is indicated as the area extending between the dotted lines. In Figure 3a, the paddle 12 extends directly between the base points 24 and the top points 24'. In Figure 3b, the paddle 12 is placed between the base points 24 of one V-shaped vane 17 and the tip 23 of the next V-shaped vane 17.

In the embodiment shown in Figure 2a and 2b, two intermediate paddles 27 are mounted at respective intermediate positions between the top rib 21 and the base points 24. The intermediate paddles 27 are equally provided with respective U-shaped gaps 28, and attached, for example welded, at their sides to the inner surfaces 20b of the blades 20 of the V-shaped vanes 17. The intermediate paddles 27 thereby provide the additional function of reinforcing the vanes 17. The provision of gaps 28, either U-shaped or otherwise in the intermediate paddles 27 is optional but preferred for the same reasons given above in relation to the gap 25. The embodiments regarding the height of the remaining portion of the paddle 12 at the bottom of the gap 25 are applicable also to the intermediate paddles 27 and the gaps 28.

The presence of paddles 12 or portions thereof between the blades 20 of the V-shaped vanes 17 represents an improvement over the prior art because the ability to deflect stones or similar objects is enhanced by these paddles.

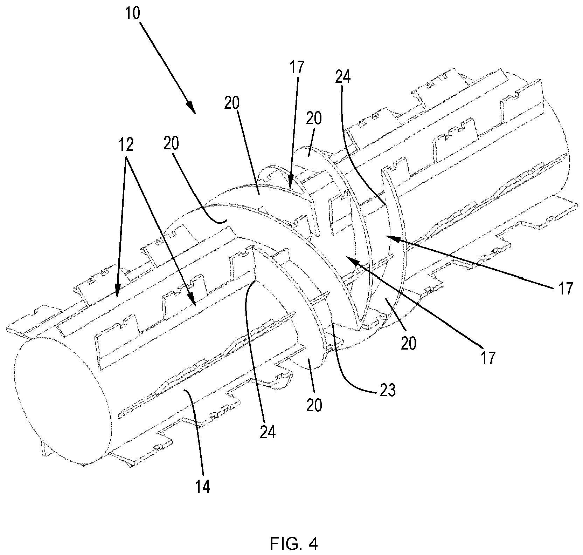

Figure 4 shows an alternative embodiment. The feed roll 10 comprises overlapping V-shaped vanes 17. Upright paddles 12 are mounted along parallel lines on the cylindrical surface 14 of the roll 10, and extend partially between the blades of several consecutive V-shaped vanes 17, forming either paddles or paddle portions extending between the base points 24 of a V-shaped vane or paddles or paddle portions mounted at intermediate positions between the blades 20 of a V-shaped vane.

## Claims

1. A feed roll (10) configured to be rotatably mounted upstream of the threshing rotors (7) of a combine harvester (15), the feed roll (10) comprising :
- a cylindrical outer surface (14),
- a plurality of paddles (12) mounted upright on said surface and oriented essentially parallel to the rotation axis (19) of the feed roll (10),
- a plurality of vanes (17) having a V-shape and mounted upright on said surface (14) in a central area (26) thereof, and configured to guide respective flows of crops towards the two threshing rotors (7), each vane (17) comprising a pair of blades (20) tapering outward in opposite directions, said blades extending between a top point (23) on said cylindrical surface (14) at or near to the tip of the V-shape and a base point (24) on the cylindrical surface,
**characterized in that** at least one paddle (12,27) or at least one portion of a paddle (12,27) is mounted in said central area (26) of the cylindrical outer surface (14) of the feed roll (10).

2. The feed roll (10) according to claim 1, wherein at least one paddle (12) or at least one portion of a paddle (12) is mounted between the base points (24) of at least one of the V-shaped vanes (17).

3. The feed roll (10) according to claim 2, wherein one paddle (12) or one portion of a paddle (12) extends between said base points (24).

4. The feed roll (10) according to claim 3, wherein said one paddle (12) or said one paddle portion is provided with an upwardly open gap (25) in a central area thereof.

5. The feed roll according to claim 4, wherein the height of said one paddle (12) or paddle portion at the bottom of the gap (25) is up to one half or up to one third of the height of the paddle (12) or paddle portion outside the gap (25).

6. The feed roll (10) according to any one of the preceding claims, comprising one or more intermediate paddles (27) or one or more intermediate portions of a paddle, mounted between the blades (20) of at least one V-shaped vane (17), at one or more intermediate locations between the top points (23) and the base points (24) of said blades (20).

7. The feed roll according to claim 6, wherein one intermediate paddle (27) or one intermediate portion of a paddle (27) extends between the blades (20) at said one or more intermediate locations.

8. The feed roll (10) according to claim 7, wherein said one intermediate paddle (27) or said one intermediate paddle portion is provided with an upwardly open gap (28) in a central area thereof.

9. The feed roll (10) according to claim 8, wherein the height of said one intermediate paddle (27) or intermediate paddle portion at the bottom of the gap (28) is up to one half or up to one third of the height of the intermediate paddle (27) or intermediate paddle portion outside the gap (28).

10. The feed roll (10) according to any one of the preceding claims, wherein the V-shaped vanes (17) are placed one behind the other without overlap between two consecutive vanes (17).

11. The feed roll according to claim 10, wherein at least one paddle (12) or at least one portion of a paddle (12) is mounted between the top points (23) or a first V-shaped vane (17) and the base points (24) of subsequent V-shaped vane (17).

12. The feed roll according to any one of claims 1 to 9 wherein said V-shaped vanes (17) are mutually overlapping in the sense that the top points (23) of one vane (17) are located between the blades (20) of a subsequent vane (17).

13. The feed roll according to any one of the preceding claims, wherein the top points (23) of the V-shaped vanes (17) are coinciding so that the V-shaped vanes have a top rib (21).

14. The feed roll (10) according to claim 13, wherein said top rib (21) is reinforced by a plate element (22).

15. A combine harvester (15) comprising two longitudinally placed threshing rotors (7) and a feed roll (10) according to any one of the preceding claims mounted upstream of said rotors (7).
